# EUROPÄISCHE PATENTSCHRIFT

(11) **EP 3 166 420 B1**
(45) Veröffentlichungstag und Bekanntmachung des Hinweises auf die Patenterteilung: **15.08.2018**
(21) Anmeldenummer: 15728462.1
(22) Anmeldetag: 02.06.2015
(51) Int. Cl.: A23L 2/46, A23L 3/22, A23L 3/18

(54) **WÄRMEBEHANDLUNGSVORRICHTUNG SOWIE VERFAHREN ZUR WÄRMEBEHANDLUNG**
THERMAL TREATMENT DEVICE AND A THERMAL TREATMENT METHOD
DISPOSITIF DE TRAITEMENT THERMIQUE ET PROCÉDÉ DE TRAITEMENT THERMIQUE

(30) Priorität: 09.07.2014 DE 102014109608
(43) Veröffentlichungstag der Anmeldung: 17.05.2017
(73) Patentinhaber: KHS GmbH, 44143 Dortmund (DE)
(72) Erfinder: ROSCHY, Johannes, 55543 Bad Kreuznach (DE); CHERDRON, Tobias, 55545 Bad Kreuznach (DE); NEUHAUS, Christopher, 65195 Wiesbaden (DE)
(86) Internationale Anmeldenummer: PCT/EP2015/062186
(87) Internationale Veröffentlichungsnummer: WO 2016/005109

(56) Entgegenhaltungen:
- EP-A2- 2 674 718
- DE-A1- 1 924 519
- LANTZ T: "ASYMMETRIC DESIGN OPTIMIZES HEAT TRANSFER, LIMITS PRESSURE LOSS", OFFSHORE, PENNWELL, TULSA, OK, US, Bd. 61, Nr. 7, 1. Juli 2001 (2001-07-01), Seite 130, XP001071565, ISSN: 0030-0608

## Beschreibung

Die Erfindung bezieht sich auf eine Wärmebehandlungsvorrichtung gemäß dem Oberbegriff Patentanspruch 1 sowie auf ein Verfahren zur Wärmebehandlung gemäß dem Oberbegriff Patentanspruch 9.

Vorrichtungen zur Wärmebehandlung von flüssigen Füllgutbestandteilen sind in der Lebensmittelindustrie, insbesondere der Getränkeindustrie, hinlänglich bekannt. Insbesondere sind Wärmebehandlungsvorrichtungen bekannt, die zur Pasteurisierung, d.h. zur Abtötung von Mikroorganismen von Füllgütern bzw. Füllgutbestandteilen dienen. Dabei werden flüssige oder zähflüssige Füllgüter bzw. Füllgutbestandteile kurzzeitig auf Temperaturen bis 100°C erwärmt, um dadurch ihre Haltbarkeit zu erhöhen. Insbesondere sind auch Wärmebehandlungsvorrichtungen bekannt geworden, die einen Wärmetauscher aufweisen, der primärseitig von dem bereits dem Pasteurisierungsprozess unterzogenen Füllgut bzw. Füllgutbestandteil und sekundärseitig von dem noch zu pasteurisierenden Füllgut bzw. Füllgutbestandteil durchflossen wird, sodass durch Restwärmeenergieausnutzung der Energiebedarf der Wärmebehandlungsvorrichtung gesenkt wird.

Die Druckschrift DE 1 924 519A offenbart ein Verfahren und eine Vorrichtung zur kontinuierlichen Herstellung von Zuckersirup.

Die Druckschrift DE 10 2012 024 806 A1 offenbart ein Verfahren sowie eine Anlage zum Herstellen eines Mischprodukts aus wenigstens einer flüssigen Hauptkomponente und wenigstens einer Zusatzkomponente.

Zuletzt offenbart die Druckschrift DE 10 2009 007 220 A1 ein Verfahren zum Betrieb einer Pasteurisierungsanlage sowie eine Pasteurisierungsanlage.

Nachteilig an den bekannten Wärmebehandlungsvorrichtungen ist, dass bei wirtschaftlich sinnvollen Größen des Wärmetauschers der Grad der Restwärmeausnutzung begrenzt ist, d.h. nur ein Teil der im bereits pasteurisierten Füllgut bzw. Füllgutbestandteil enthaltenen Wärmeenergie auf das noch zu pasteurisierende kalte Füllgut bzw. den kalten Füllgutbestandteil übertragen werden kann.

Ausgehend hiervon ist es Aufgabe der Erfindung eine Wärmebehandlungsvorrichtung aufzuzeigen, die in Bezug auf den Energiebedarf optimiert ausgebildet ist. Die Aufgabe wird ausgehend vom Oberbegriff des Patentanspruchs 1 durch dessen kennzeichnende Merkmale gelöst. Ein Verfahren zur Wärmebehandlung eines flüssigen oder zähflüssigen Füllgutbestandteils ist Gegenstand des nebengeordneten Patentanspruchs 9.

Gemäß einem ersten Aspekt betrifft die Erfindung eine Vorrichtung zur Wärmebehandlung eines flüssigen oder zähflüssigen Füllguts als Primärprozess. Dieser Primärprozess kann beispielsweise die Pasteurisierung von Zuckersirup oder einem ähnlichen Füllgut bzw. Füllgutbestandteil sein. Die Vorrichtung umfasst einen ersten und einen zweiten Wärmetauscher, die jeweils eine Primärseite und eine Sekundärseite aufweisen. Als Primärseite des Wärmetauschers wird im Sinne der Erfindung die Wärmetauscherseite verstanden, die von dem Wärmeenergie abgebenden Medium durchflossen wird. Dementsprechend wird unter der Sekundärseite eines Wärmetauschers die Wärmetauscherseite verstanden, die von dem Wärmeenergie aufnehmenden Medium durchflossen wird. Der erste und zweite Wärmetauscher kann auch in einer Wärmetauscheranordnung realisiert sein, die einen ersten Wärmetauscherabteil und einen zweiten Wärmetauscherabteil aufweist, wobei die Wärmetauscherabteile jeweils die Funktionalität von einzelnen Wärmetauschern aufweisen. Der sekundärseitige Zulauf des ersten Wärmetauschers, d.h. der Zulauf zur Sekundärseite des ersten Wärmetauschers, ist mit dem Zulauf der Wärmebehandlungsvorrichtung verbunden, über den der flüssige oder zähflüssige Füllgutbestandteil bzw. das Füllgut der Wärmebehandlungsvorrichtung zugeführt wird. Weiterhin ist der sekundärseitige Ablauf des ersten Wärmetauschers mit dem sekundärseitigen Zulauf des zweiten Wärmetauschers verbunden. Der sekundärseitige Ablauf des zweiten Wärmetauschers ist mit einer Prozessstrecke gekoppelt, und die Prozessstrecke ist auslaufseitig mit der Primärseite des ersten Wärmetauschers verbunden. Zwischen dem Ablauf des ersten Wärmetauschers und der Prozessstrecke ist ein Abzweig vorgesehen, mittels dem ein Teilstrom des flüssigen oder zähflüssigen Füllgutbestandteils abgezweigt bzw. abgeleitet wird. Dieser Abzweig ist mit dem Zulauf einer weiteren Wärmeaustauschstrecke verbunden, die einem Sekundärprozess zugeordnet ist, sodass über die weitere Wärmeaustauschstrecke diesem Sekundärprozess in dem Teilstrom des Füllgutbestandteils enthaltene thermische Energie zugeführt wird. Der Ablauf der weiteren Wärmeaustauschstrecke ist mit dem sekundärseitigen Zulauf des ersten Wärmetauschers verbunden, sodass der abgeleitete Teilstrom nach Durchlaufen der Wärmeaustauschstrecke erneut den ersten Wärmetauscher durchfließt, und zwar vorzugsweise vermischt mit einem, über den Zulauf der Wärmebehandlungsvorrichtung zugeführten Füllgutstrom.

Der wesentliche Vorteil der erfindungsgemäßen Wärmebehandlungsvorrichtung besteht darin, dass durch die Abzweigung eines Teilstroms des Füllgutstroms nach dem ersten Wärmetauscher und das erneute Zuführen dieses Teilstroms am Zulauf der Sekundärseite des ersten Wärmetauschers eine verbesserte Wärmeübertragung im ersten Wärmetauscher erreicht wird. Dadurch kann eine verbesserte Restwärmeausnutzung erreicht werden, wodurch der Energiebedarf der Wärmebehandlungsvorrichtung bzw. des Primärprozesses insgesamt gesenkt werden kann. Ebenfalls wird es ermöglicht, die Energiekosten des Sekundärprozesses dadurch zu senken, dass zumindest ein Teil des Energiebedarfs des Sekundärprozesses aus dem Primärprozess gewonnen werden kann.

Gemäß eines Ausführungsbeispiels ist der, durch die Sekundärseite des ersten Wärmetauschers fließende Volumenstrom größer als der durch die Primärseite des Wärmetauschers fließende Volumenstrom. In anderen Worten wird der Wärmetauscher asymmetrisch durchflossen, wobei der Wärme abgebende Volumenstrom kleiner ist als der Volumenstrom, dem Wärmeenergie zugeführt wird. Durch diese Asymmetrie wird ein verbesserter Wärmeübertrag von der Primärseite des ersten Wärmetauschers auf dessen Sekundärseite erreicht, was zu einer verbesserten Restwärmeenergieausnutzung der, in dem bereits der Wärmebehandlung unterzogenen Füllgutbestandteilstrom enthaltenen Wärmemenge führt.

Bevorzugt ist der Abzweig zwischen dem ersten und zweiten Wärmetauscher vorgesehen. Mehr im Detail ist der Abzweig vorzugsweise zwischen dem sekundärseitigen Ablauf des ersten Wärmetauschers und dem sekundärseitigen Zulauf des zweiten Wärmetauschers vorgesehen. Mehr im Detail ist vorgesehen, dass die dem Sekundärprozess zugeordnete Wärmeaustauschstrecke lediglich von einem Teilstrom des bereits über die Restwärme des bereits wärmebehandelten Füllgutstroms erwärmten Füllgutes durchflossen wird. Durch Veränderung der Größe des Teilstromes und/oder Veränderungen der Temperaturen der beteiligten Fluidströme können dem Sekundärprozess variable Wärmeenergiemengen, beispielsweise geringe bis mittlere Wärmeenergiemengen zugeführt werden.

Alternativ kann der Abzweig auch zwischen dem Ablauf des zweiten Wärmetauschers und dem Zulauf zu der Prozessstrecke vorgesehen sein. In diesem Falle ist es möglich, dem Sekundärprozess größere Wärmeenergiemengen zuzuführen, da das Füllgut und somit auch der erst an dieser Stelle abgezweigte Teilstrom des Füllgutes, nach dem zweiten Wärmetauscher eine höhere Temperatur aufweist, insbesondere eine Temperatur, die zur Pasteurisierung des Füllgutes geeignet ist oder sogar noch darüber liegt, d.h. beispielsweise Temperaturen zwischen 75 und 100°C, insbesondere Temperaturen zwischen 80° und 90°C.

Besonders bevorzugt ist der Volumenstrom des mittels des Abzweigs abgeführten Teilstroms steuerbar. Dadurch ist es möglich, den Wärmeeintrag in den Sekundärprozess bzw. den Grad der Restwärmeenergieausnutzung im ersten Wärmetauscher bedarfsgerecht zu steuern. Insbesondere kann der Volumenstrom des abgezweigten Teilstroms derart gewählt werden, dass die mittels des abgezweigten Teilstroms im Sekundärprozess eingebrachte Wärmeenergie dem dort benötigten Wärmeenergiebedarf entspricht.

In einem bevorzugten Ausführungsbeispiel ist der Primärteil des zweiten Wärmetauschers von einem durch eine Heizeinrichtung erwärmten Heizmedium durchflossen. Über dieses Heizmedium lässt sich das die Sekundärseite des zweiten Wärmetauschers durchfließende Füllgut auf eine für die Wärmebehandlung gewünschte Temperatur erhitzen, insbesondere eine Temperatur, die für eine Pasteurisierung des Füllguts geeignet ist.

Die Prozessstrecke der Wärmebehandlungsvorrichtung kann insbesondere eine Pasteurisierungsstrecke sein. Auf dieser Prozessstrecke wird beispielsweise das Füllguttemperatur oberhalb einer für die Pasteurisierung notwendigen Temperaturschwelle gehalten. Die Länge der Prozessstrecke ist dabei derart gewählt, dass der die Prozessstrecke durchfließende Füllgutbestandteil eine für den Pasteurisierungsprozess notwendige Verweildauer im Bereich dieser Prozessstrecke aufweist. Die Prozessstrecke kann beispielsweise durch eine spiralförmig ausgebildete Rohrleitung gebildet werden.

Besonders bevorzugt ist die Wärmbehandlungsvorrichtung derart ausgebildet, dass der erste und zweite Wärmetauscher zur Durchleitung von Zuckersirup ausgebildet sind und dass die Wärmeaustauschstrecke in einer Einrichtung zur Lösung von Zucker, insbesondere kristallinem Zucker in einem Lösungsmittel, beispielsweise Wasser, vorgesehen ist. Dadurch kann in vorteilhafter Weise sowohl die Pasteurisierung des Zuckersirups als Primärprozess und ein den Zuckersirup zubereitender Prozess, nämlich das Auflösen von kristallinem Zucker in Wasser als endothermer Sekundärprozess, in einer einzigen Wärmebehandlungsvorrichtung vollzogen werden.

Gemäß einem weiteren Aspekt bezieht sich die Erfindung auf ein Verfahren zur Wärmebehandlung eines flüssigen oder zähflüssigen Füllgutbestandteils als Primärprozess. Das Verfahren wird innerhalb einer Vorrichtung durchgeführt, die einen ersten und einen zweiten Wärmetauscher jeweils mit einer Primärseite und einer Sekundärseite umfasst. Das über einen Zulauf bereitgestellte flüssige oder zähflüssige Füllgut wird durch die Sekundärseite des ersten Wärmetauschers und anschließend durch die Sekundärseite des zweiten Wärmetauschers durchgeleitet, wobei der flüssige oder zähflüssige Füllgutbestandteil nach dem zweiten Wärmetauscher eine Prozessstrecke und daran anschließend die Primärseite des ersten Wärmetauschers durchfließt.

Das Verfahren zeichnet sich dadurch aus, dass zwischen der Sekundärseite des ersten Wärmetauschers und der Prozessstrecke ein Teilstrom des flüssigen oder zähflüssigen Füllguts abgezweigt wird, dass der abgezweigte Teilstrom einer Wärmeaustauschstrecke zugeführt wird, um im Teilstrom enthaltene thermische Energie einem Sekundärprozess zuzuführen und dass der abgezweigte Teilstrom nach Durchfließen der Austauschstrecke dem Zulauf der Sekundärseite des ersten Wärmetauschers wieder zugeführt wird.

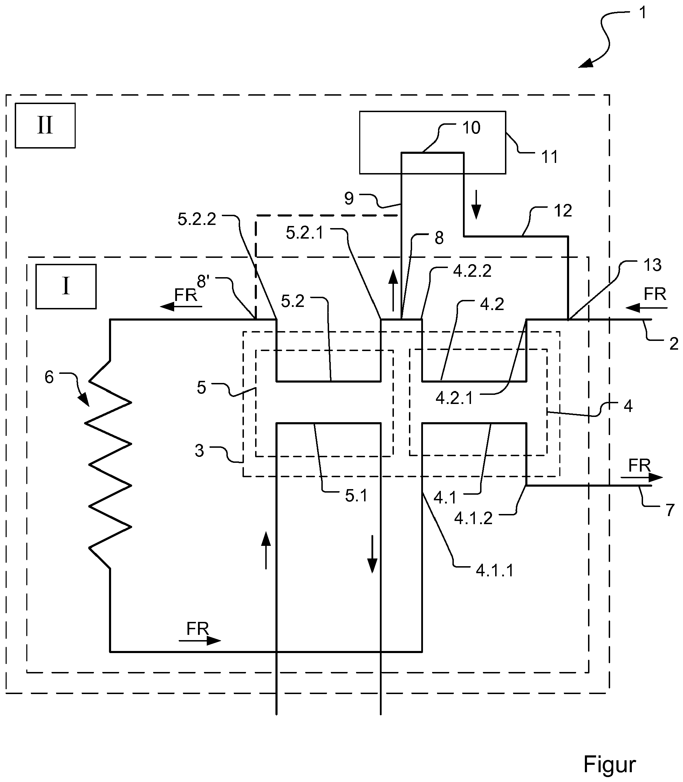

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen. Weiterbildungen, Vorteile und Anwendungsmöglichkeiten der Erfindung ergeben sich auch aus der nachfolgenden Beschreibung von Ausführungsbeispielen und aus der Figur. Dabei sind alle beschriebenen und/oder bildlich dargestellten Merkmale für sich oder in beliebiger Kombination grundsätzlich Gegenstand der Offenbarung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figur näher erläutert, wobei die Figur beispielhaft eine schematische Darstellung einer Wärmebehandlungsvorrichtung in einem Ausführungsbeispiel zeigt.

In der Figur ist mit dem Bezugszeichen 1 eine Vorrichtung zur Wärmebehandlung eines flüssigen oder zähflüssigen Füllguts oder Füllgutbestandteils gezeigt. Die Vorrichtung 1 weist einen ersten Vorrichtungsteil I und einen zweiten Vorrichtungsteil II auf, wobei der erste Vorrichtungsteil I zur Durchführung eines Primärprozesses und der zweite Vorrichtungsteil II zur Durchführung eines Sekundärprozesses ausgebildet ist. Der erste und zweite Vorrichtungsteil I, II sind in der nachfolgend beschriebenen Weise miteinander derart gekoppelt, dass Wärmeenergie des Primärprozesses aus dem ersten Vorrichtungsteil I in den zweiten Vorrichtungsteil II transferiert wird, sodass zwischen dem Primärprozess und dem Sekundärprozess ein Wärmetransfer stattfindet. Der Primärprozess kann beispielsweise ein Kurzzeiterhitzungsprozess sein, bei dem ein Füllgut oder Füllgutbestandteil pasteurisiert wird. Der Füllgutbestandteil kann beispielsweise ein Zuckersirup sein. Der Sekundärprozess kann beispielsweise ein Zuckerlöseprozess sein, bei dem ein in kristalliner Form vorliegender Zucker in einem Lösungsmittel, beispielsweise Wasser, aufgelöst wird. Derartige Löseprozesse sind endotherme Prozesse, woraus sich ergibt, dass dem Prozess Wärme zugeführt werden muss, um eine hinreichende Lösungsgeschwindigkeit des Zuckers im Lösungsmittel zu erhalten. Dabei ist die Lösegeschwindigkeit proportional der Lösetemperatur.

Die Wärmebehandlungsvorrichtung 1 weist eine Rohrleitungsstrecke auf, mittels der das Füllgut durch die Wärmebehandlungsvorrichtung 1 geleitet wird. Näher im Detail wird das Füllgut der Wärmebehandlungsvorrichtung 1 über den Zulauf 2 zugeführt und einer Wärmetauscheranordnung 3 zugeleitet. Die Wärmetauscheranordnung 3 weist einen ersten Wärmetauscher 4 und einen zweiten Wärmetauscher 5 auf, die jeweils eine Primärseite 4.1, 5.1 und eine Sekundärseite 4.2, 5.2 aufweisen. Unter Primärseite eines Wärmetauschers wird im Sinne der Erfindung die Seite verstanden, die von dem Wärmeenergie abgebenden Medium durchflossen wird. Demgemäß wird unter der Sekundärseite eines Wärmetauschers die Seite verstanden, die von der Wärmeenergie aufnehmenden Medium durchflossen wird.

Der über den Zulauf 2 zugeführte Füllgutstrom durchfließt in Fließrichtung FR zunächst die Sekundärseite 4.2 des ersten Wärmetauschers 4 und daran anschließend, vorzugsweise unmittelbar daran anschließend, die Sekundärseite 5.2 des zweiten Wärmetauschers 5. Der erste Wärmetauscher 4 und der zweite Wärmetauscher 5 der Wärmetauscheranordnung 3 können als voneinander getrennte, eigenständige Wärmetauscher ausgebildet sein, die beispielsweise fluidisch über eine außenseitig diese Wärmetauscher verbindende Fluidleitung gekoppelt sind. Alternativ kann die Wärmetauscheranordnung 3 zwei Wärmetauscherabteilungen aufweisen, die fluidisch miteinander gekoppelt sind, wobei ein erster Anteil den ersten Wärmetauscher 4 und ein zweiter Anteil den zweiten Wärmetauscher 5 bildet.

Mehr im Detail ist der Zulauf 2 mit dem Zulauf 4.2.1 der Sekundärseite 4.2 des ersten Wärmetauschers und der Ablauf 4.2.2 der Sekundärseite 4.2 des ersten Wärmetauschers 4 mit dem Zulauf 5.2.1 der Sekundärseite 5.2 des zweiten Wärmetauschers 5 verbunden, sodass die Sekundärseiten 4.2, 5.2 der Wärmetauscher 4, 5 unmittelbar aufeinander folgend von dem Füllgut bzw. dem Füllgutbestandteil durchflossen werden. An den Ablauf 5.2.2 der Sekundärseite 5.2 des zweiten Wärmetauschers 5 ist eine Prozessstrecke 6 angeschlossen, die von dem Füllgut durchflossen wird. Durch das Durchfließen der Sekundärseiten 4.2, 5.2 des ersten und zweiten Wärmetauschers 4, 5 erfährt das Füllgut eine Erwärmung derart, dass der Füllgutbestandteil eine zur Pasteurisierung geeignete Füllguttemperatur (z.B. zwischen 70°C und 100 °C) aufweist. Die Prozessstrecke 6 kann eine an die notwendige Pasteurisierungsdauer angepasste Prozessstreckenlänge aufweisen, sodass das Füllgut eine gewisse Verweildauer in der Prozessstrecke 6 hat und dabei innerhalb der Prozessstrecke 6 auf einer, für den Pasteurisierungsprozess notwendigen Temperatur gehalten wird. Abhängig von der Prozessstreckenlänge können an der Prozessstrecke 6 Mittel vorgesehen sein, um das Füllgut auf der für die Pasteurisierung notwendigen Temperatur zu halten. Diese Mittel können beispielsweise Isolationsmittel oder aber auch Heizmittel an der Prozessstrecke 6 sein.

Der Auslauf der Prozessstrecke 6 ist in Fließrichtung FR an die Primärseite 4.1 des ersten Wärmetauschers 4 angeschlossen, sodass das im Bereich der Prozessstrecke 6 pasteurisierte Füllgut bzw. der Füllgutbestandteil die Primärseite 4.1 durchfließt und dabei im Füllgut enthaltene Wärmeenergie an das noch kalte Füllgut der Sekundärseite 4.2 des ersten Wärmetauschers 4, d.h. das Füllgut im Vorlauf, abgibt. Der Ablauf 4.1.2 der Primärseite 4.1 des ersten Wärmetauschers 4 ist mit dem Ablauf 7 der Wärmebehandlungsvorrichtung 1 gekoppelt, über den das pasteurisierte Füllgut zur weiteren Verwendung, beispielsweise Lagerung oder direkten Abfüllung, abgeführt wird.

Zur externen Wärmezuführung ist die Primärseite 5.1 des zweiten Wärmetauschers 5 von einem Heizmedium durchflossen. Die Primärseite 5.1 ist dabei mit einer Heizeinrichtung verbunden, über die das Heizmedium derart erwärmt wird, dass das die Sekundärseite 5.2 durchfließende Füllgut durch Wärmeabgabe des Heizmediums beim Durchfließen des zweiten Wärmetauschers 5 auf die für die Pasteurisierung in der Prozessstrecke 6 notwendige Prozesstemperatur erwärmt wird. Vorzugsweise sind die Wärmetauscher 4, 5 als nach dem Gegenstromprinzip arbeitende Wärmetauscher ausgebildet, d.h. die Primärseiten und Sekundärseiten der jeweiligen Wärmetauscher werden in unterschiedlichen Richtungen von dem Wärme abgebenden bzw. dem Wärme aufnehmenden Medium durchflossen.

Um eine wärmetechnische Kopplung des ersten Vorrichtungsteils I mit dem zweiten Vorrichtungsteil II zu erreichen, ist zwischen dem sekundärseitigen Ablauf 4.2.2 und der Prozessstrecke 6 ein Abzweig 8 vorgesehen, mittels dem ein Teilstrom des zur Prozessstrecke 6 hingeführten Füllgutstroms abgezweigt und dem zweiten Vorrichtungsteil II zugeführt wird. Insbesondere kann eine Rohrleitung 9 vorgesehen sein, die den Abzweig 8 mit einer Wärmeaustauschstrecke 10 bzw. einem Wärmetauscher verbindet, sodass der abgezweigte Teilstrom diese Wärmeaustauschstrecke 10 durchfließt. Die im zweiten Vorrichtungsteil II vorgesehene Wärmeaustauschstrecke 10 dient der Zuführung von Wärmeenergie zu einer im zweiten Vorrichtungsteil II vorgesehenen Einrichtung 11, sodass ein in der Einrichtung 11 vorhandenes Medium durch die Durchleitung des Teilstroms des Füllguts durch die Wärmeaustauschstrecke 10 erwärmt wird. Wie zuvor bereits ausgeführt, kann in der Einrichtung 11 ein Zuckerlöseprozess durchgeführt werden, bei dem ein in kristalliner Form zugegebener Zucker in einem Lösungsmittel aufgelöst wird. Durch den Wärmeeintrag mittels der Wärmeaustauschstrecke 10 wird ein beschleunigter Lösungsprozess erreicht.

Die Wärmeaustauschstrecke 10 ist auslaufseitig mittels einer Rohrleitung 12 mit dem Zulauf 4.2.1 der Sekundärseite 4.2 des ersten Wärmetauschers 4 gekoppelt, sodass der abgezweigte Teilstrom nach Durchfließen der Wärmeaustauschstrecke 10 erneut die Sekundärseite 4.2 des ersten Wärmetauschers 4 durchfließt. Die Zuführung des Teilstroms zu der Sekundärseite des ersten Wärmetauschers 4 ist derart gewählt, dass dieser Teilstrom den Wärmetauscher 4 zusammen mit dem über den Zulauf 2 zugeführten Füllgutstrom durchfließt. Die Einbringung des Teilstroms in den Füllgutstrom kann beispielsweise durch einen Mischer 13 oder ein Kopplungsstück erfolgen.

Wie in der Figur gezeigt, kann der Abzweig 8 zwischen dem Ablauf 4.2.2 der Sekundärseite 4.2 des ersten Wärmetauschers 4 und dem Zulauf 5.2.1 der Sekundärseite 5.2 des zweiten Wärmetauschers 5 vorgesehen sein. Alternativ kann der Abzweig 8' auch zwischen dem Ablauf 5.2.2 der Sekundärseite 5.2 des zweiten Wärmetauschers 5 und der Prozessstrecke 6 vorgesehen sein.

Unter der Annahme, dass am Zulauf 2 der Wärmebehandlungsvorrichtung 1 ein Füllgutstrom mit einem Volumenstrom V_{F} zugeführt wird und über den Abzweig 8, 8' ein Volumenteilstrom V_{T} abgezweigt wird, wird der erste Wärmetauscher 4 sekundärseitig von einem größeren Volumenstrom (V_{T} + V_{F}) durchflossen, wohingegen der erste Wärmetauscher 4 primärseitig lediglich vom Volumenstrom V_{F} durchflossen wird. Durch dieses unsymmetrische Durchfließen der Wärmetauscherseiten des ersten Wärmetauschers 4 wird erreicht, dass ein größerer Anteil an Wärmeenergie von dem in der Primärseite 4.1 geführten Volumenstrom V_{F} an den in der Sekundärseite 4.2 des ersten Wärmetauschers 4 geführten Volumenstrom (V_{T} + V_{F}) übertragen werden kann. Damit kann der Wirkungsgrad der gesamten Wärmebehandlungsvorrichtung 1, d.h. der Wirkungsgrad der Kombination der ersten und zweiten Vorrichtungsteile I, II entscheidend verbessert werden.

Vorzugsweise ist der zum zweiten Vorrichtungsteil II hin abgezweigte Teilstrom des Füllguts in seinem Volumenstrom steuer- und/oder regelbar, dies kann beispielsweise durch ein steuerbares Abzweigventil am Abzweig 8, 8' erreicht werden, oder aber auch durch einen im Durchfluss steuerbaren Mischer 13. Dadurch kann erreicht werden, dass der Volumenstrom des abgezweigten Teilstroms derart gewählt wird, dass der durch das Durchfließen der Wärmeaustauschstrecke 10 durch diesen Teilstrom erreichte Wärmeeintrag in den zweiten Vorrichtungsteil II dem gewünschten Wert entspricht. Beispielsweise kann der Wärmeeintrag in den Sekundärprozess einem Teil oder vollständig der im Sekundärprozess benötigten Wärmeenergie entsprechen.

Die Wärmebehandlungsvorrichtung 1 wurde voranstehend an einem Ausführungsbeispiel beschrieben, bei dem der Primärprozess ein Pasteurisierungsprozess eines Zuckersirups ist und der Sekundärprozess ein Zuckerlöseprozess von kristallinem Zucker in einem Lösungsmittel. Es versteht sich, dass die beschriebene Wärmebehandlungsvorrichtung 1 in einer Vielzahl von Anwendungen im Bereich der Lebensmittelindustrie, insbesondere der Getränkeindustrie eingesetzt werden kann, beispielsweise als Sekundärprozess für die Vorwärmung einer Prozessflüssigkeit beispielsweise in einem Pasteur oder ein Füllgutvorwärmen vor einem Abfüllprozess.

Bei einem weiteren Ausführungsbeispiel der vorliegenden Erfindung ist vorgesehen, dass die Wärmeübertragung vom Primärprozess auf den Sekundärprozess nicht unter Verwendung eines separaten, eine stoffliche Vermischung verhindernden Wärmetauschers erfolgt.
Anstatt dessen ist vorgesehen, dass zumindest ein Teilstrom des Füllguts selbst von dem Primärprozess in den Sekundärprozess oder umgekehrt übergeht und sich dort zumindest teilweise wieder mit zumindest einer Teilmenge des Füllgutes vermischt. Bei dieser Vorgehensweise kann somit auf einen zusätzlichen Wärmetauscher verzichtet werden, die mit dem zusätzlichen Wärmetauscher unvermeidbaren Temperaturverluste können somit vermieden werden.
Dieses Ausführungsbeispiel kommt vorteilhaft insbesondere dann zur Anwendung, wenn es sich bei dem zu pasteurisierenden Füllgut um ein Mischprodukt und/oder um ein Lösungsprodukt handelt wie beispielsweise einer Mischung auf Wasser und in diesem Wasser gelöstem Zucker.

Ein Misch- oder Sammelbehälter ist vollständig oder teilweise mit dem Füllgut in der gewünschten Konzentration und Zusammensetzung gefüllt. Ist der Misch-oder Sammelbehälter nur teilweise mit dem Füllgut in der Soll-Zusammensetzung gefüllt, so können zur Herstellung des Füllgutes erforderliche Komponenten vollständig oder teilweise ebenfalls in dem Misch- oder Sammelbehälter enthalten sein.
Jedenfalls verlässt das Füllgut den Misch- oder Sammelbehälter nur dann, wenn das Füllgut seine Soll-Zusammensetzung aufweist. Dabei weist das Füllgut eine vergleichsweise niedrige Temperatur auf, beispielsweise eine Temperatur von lediglich 45-50°C.

Dieses Füllgut wird nun direkt aus dem Misch- oder Sammelbehälter über die Rohrleitung 12 zum Zulauf der Sekundärseite des ersten Wärmetauschers geleitet. In der Regel entfällt bei diesem Ausführungsbeispiel der Zulauf 2. Nach dem Durchströmen der Sekundärseiten des ersten und eventuell auch des zweiten Wärmetauschers 4, 5 wird ein Teilstrom des erwärmten Füllgutes wieder dem Misch-oder Sammelbehälter zugeführt, wo sich dieser Teilstrom mit den Komponenten oder auch dem dort befindlichen Füllgut in Soll-Zusammensetzung vermischt und diese somit erwärmt.

Die Erfindung wurde voranstehend an Ausführungsbeispielen beschrieben. Es versteht sich, dass eine Vielzahl von Änderungen oder Abwandlungen möglich sind, ohne dass dadurch der der Erfindung zugrundeliegende Erfindungsgedanke verlassen wird.

### Bezugszeichenliste

- 1: Wärmebehandlungsvorrichtung
- 2: Zulauf
- 3: Wärmetauscheranordnung
- 4: erster Wärmetauscher
- 4.1: Primärseite
- 4.1.1: Zulauf
- 4.1.2: Ablauf
- 4.2: Sekundärseite
- 4.2.1: Zulauf
- 4.2.2: Ablauf
- 5: zweiter Wärmetauscher
- 5.1: Primärseite
- 5.2: Sekundärseite
- 5.2.1: Zulauf
- 5.2.2: Ablauf
- 6: Prozessstrecke
- 7: Ablauf
- 8, 8': Abzweig
- 9: Rohrleitung
- 10: Wärmeaustauschstrecke
- 11: Einrichtung
- 12: Rohrleitung
- 13: Mischer

- I: erster Vorrichtungsteil
- II: zweiter Vorrichtungsteil

- FR: Fließrichtung

## Patentansprüche

1. Vorrichtung zur Wärmebehandlung eines flüssigen oder zähflüssigen Füllguts als Primärprozess umfassend einen ersten und einen zweiten Wärmetauscher (3, 4) jeweils mit einer Primärseite (4.1, 5.1) und einer Sekundärseite (4.2, 5.2), wobei der sekundärseitige Zulauf (4.2.1) des ersten Wärmetauschers (4) mit einem Zulauf (2) für das flüssige oder zähflüssige Füllgut verbunden ist, wobei der sekundärseitige Ablauf (4.2.2) des ersten Wärmetauschers (4) mit dem sekundärseitigen Zulauf (5.2.1) des zweiten Wärmetauschers (5) verbunden ist, wobei der sekundärseitige Ablauf (5.2.2) des zweiten Wärmetauschers (5) mit einer Prozessstrecke (6) verbunden ist und wobei die Prozessstrecke (6) auslaufseitig mit der Primärseite (4.1) des ersten Wärmetauschers (4) verbunden ist, **dadurch gekennzeichnet, dass** zwischen dem sekundärseitigen Ablauf (4.2.2) des ersten Wärmetauschers (4) und der Prozessstrecke (6) ein Abzweig (8, 8') vorgesehen ist, mittels dem ein Teilstrom des flüssigen oder zähflüssigen Füllguts abgezweigt wird,
dass der Abzweig (8, 8') mit dem Zulauf einer Wärmeaustauschstrecke (10) verbunden ist, mittels der einem Sekundärprozess im Teilstrom enthaltene thermische Energie zugeführt wird und dass der Ablauf der Wärmeaustauschstrecke (10) mit dem sekundärseitigen Zulauf (4.2.1) des ersten Wärmetauschers (4) verbunden ist,
oder dass
der Abzweig (8, 8') mit dem Einlauf eines Misch- oder Sammelbehälters verbunden ist, wo sich der Teilstrom mit dem Füllgut oder mit Komponenten des Füllgutes vermischt, wodurch diesen im Teilstrom enthaltene thermische Energie zugeführt wird und dass ein Ablauf des Misch- oder Sammelbehälters mit dem sekundärseitigen Zulauf (4.2.1) des ersten Wärmetauschers (4) verbunden ist.

2. Vorrichtung nach Anspruch 1, **dadurch gekennzeichnet, dass** der durch die Sekundärseite (4.2) des ersten Wärmetauschers (4) fließende Volumenstrom größer ist als der durch die Primärseite (4.1) des ersten Wärmetauschers (4) fließende Volumenstrom.

3. Vorrichtung nach Anspruch 1 oder 2, **dadurch gekennzeichnet, dass** der Abzweig (8) zwischen dem ersten und zweiten Wärmetauscher (4, 5) vorgesehen ist.

4. Vorrichtung nach Anspruch 1 oder 2, **dadurch gekennzeichnet, dass** der Abzweig (8') zwischen dem zweiten Wärmetauscher (5) und der Prozessstrecke (6) vorgesehen ist.

5. Vorrichtung nach einem der vorhergehenden Ansprüche, **dadurch gekennzeichnet, dass** der Volumenstrom des mittels des Abzweigs (8, 8') abgeführten Teilstroms steuerbar ist.

6. Vorrichtung nach einem der vorhergehenden Ansprüche, **dadurch gekennzeichnet, dass** die Primärseite (5.1) des zweiten Wärmetauschers (5) von einem durch eine Heizeinrichtung erwärmten Heizmedium durchflossen ist.

7. Vorrichtung nach einem der vorhergehenden Ansprüche, **dadurch gekennzeichnet, dass** die Prozessstrecke (6) eine Pasteurisierungsstrecke ist.

8. Vorrichtung nach einem der vorhergehenden Ansprüche, **gekennzeichnet durch** deren Ausbildung derart, dass der erste und zweite Wärmetauscher (4, 5) zur Durchleitung von Zuckersirup ausgebildet ist und dass die Wärmeaustauschstrecke (10) in einer Einrichtung (11) zur Lösung von Zucker in einem Lösemittel, beispielsweise Wasser, vorgesehen ist.

9. Verfahren zur Wärmebehandlung eines flüssigen oder zähflüssigen Füllguts als Primärprozess mittels einer Vorrichtung (1) umfassend einen ersten und einen zweiten Wärmetauscher (4, 5) jeweils mit einer Primärseite (4.1, 5.1) und einer Sekundärseite (4.2, 5.2), wobei das über einen Zulauf (2) bereitgestellte flüssige oder zähflüssige Füllgut durch die Sekundärseite (4.2) des ersten Wärmetauschers (4) und anschließend durch die Sekundärseite (5.2) des zweiten Wärmetauschers (5) durchgeleitet wird, wobei das flüssige oder zähflüssige Füllgut nach dem zweiten Wärmetauscher (5) eine Prozessstrecke (6) und daran anschließend die Primärseite (4.1) des ersten Wärmetauschers (4) durchfließt, **dadurch gekennzeichnet, dass** zwischen der Sekundärseite (4.2) des ersten Wärmetauschers (4) und der Prozessstrecke (6) ein Teilstrom des flüssigen oder zähflüssigen Füllguts abgezweigt wird,
dass der abgezweigte Teilstrom einer Wärmeaustauschstrecke (10) zugeführt wird, um im Teilstrom enthaltene thermische Energie einem Sekundärprozess zuzuführen und dass der abgezweigte Teilstrom nach Durchfließen der Wärmeaustauschstrecke (10) an den Zulauf (4.2.1) der Sekundärseite (4.2) des ersten Wärmetauschers (4) zurückgeführt wird,
oder dass
der abgezweigte Teilstrom dem Einlauf eines Misch- oder Sammelbehälters zugeführt wird, um die im Teilstrom enthaltene thermische Energie dem im Misch-oder Sammelbehälter enthaltenen Füllgut oder dort enthaltenen Komponenten zugeführt wird und dass das Volumen des Teilstroms nach dem Verlassen des Misch- oder Sammelbehälters dem sekundärseitigen Zulauf (4.2.1) des ersten Wärmetauschers (4) zugeführt wird.

## Claims

1. Device for the thermal treatment of a liquid or viscous filling material, as a primary process, comprising a first and a second heat exchanger (3, 4), each of which has a primary side (4.1, 5.1) and a secondary side (4.2, 5.2), wherein the secondary side intake (4.2.1) of the first heat exchanger (4) is connected to an intake (2) for the liquid or viscous material, wherein the secondary side outlet (4.2.2) of the first heat exchanger (4) is connected to the secondary side intake (5.2.1) of the second heat exchanger (5), wherein the secondary side outlet (5.2.2) of the second heat exchanger (5) is connected to a process section (6), and wherein the process section (6) is connected, on the discharge side, to the primary side (4.1) of the first heat exchanger (4), **characterised in that** between the secondary side outlet (4.2.2) of the first heat exchanger (4) and the process section (6) a branch (8, 8') is provided, by means of which a partial flow of the liquid or viscous material is branched off, and **in**
**that** the branch (8, 8') is connected to the intake of a heat exchanger section (10), by means of which thermal energy contained in the partial flow is fed to a secondary process, and that the outlet of the heat exchanger section (10) is connected to the secondary side intake (4.2.1) of the first heat exchanger (4), or that
the branch (8, 8') is connected to the intake of a mixing or collecting container, where the partial flow is mixed with the filling material or with components of the filling material, whereby thermal energy contained in the partial flow is conveyed to these, and that an outlet of the mixing or collecting container is connected to the secondary side inlet (4.2.1) of the first heat exchanger (4).

2. Device according to claim 1, **characterised in that** the volume flow flowing through the secondary side (4.2) of the first heat exchanger (4) is greater than the volume flow flowing through the primary side (4.1) of the first heat exchanger (4).

3. Device according to claim 1 or 2, **characterised in that** the branch (8) is provided between the first and second heat exchangers (4, 5).

4. Device according to claim 1 or 2, **characterised in that** the branch (8') is provided between the second heat exchanger (5) and the process section (6).

5. Device according to any one of the preceding claims, **characterised in that** the volume flow of the partial flow led off by means of the branch (8, 8') can be controlled.

6. Device according to any one of the preceding claims, **characterised in that** the primary side (5.1) of the second heat exchanger (5) is flowed through by a heat medium which is heated by the heating device.

7. Device according to any one of the preceding claims, **characterised in that** the process section (6) is a pasteurising section.

8. Device according to any one of the preceding claims, **characterised by** its configuration in such a way that the first and secondary heat exchangers (4, 5) is configured for conveying sugar syrup, and that the heat exchange section (10) is provided in a device (11) for dissolving sugar in a solvent, such as water.

9. Method for the thermal treatment of a liquid or viscous filling material as a primary process by means of a device (1) comprising a first and a second heat exchanger (4, 5), each with a primary side (4.1, 5.1) and a secondary side (4.2, 5.2), wherein the liquid or viscous filling material provided via an inlet (2) is conveyed through the secondary side (4.2) of the first heat exchanger (4) and then through the secondary side (5.2) of the second heat exchanger (5), wherein the liquid or viscous filling material, after the second heat exchanger (5), flows through a process section (6) and then through the primary side (4.1) of the first heat exchanger (4), **characterised in that,** between the secondary side (4.2) of the first heat exchanger (4) and the process section (6), a partial flow of the liquid or viscous filling material is branched off,
that the partial flow which is branched off is conveyed to a heat exchange section (10), in order for thermal energy contained in the partial flow to be conveyed to a secondary process, and that the partial flow branched off, after flowing through the heat exchange section (10) is conveyed back to the intake (4.2.1) of the secondary side (4.2) of the first exchanger (4),
or that
the partial flow which is branched off is conveyed to the intake of a mixing or collecting container, in order for the thermal energy contained in the partial flow to be conveyed to the filling material contained in the mixing or collecting container or components contained there, and that the volume of the partial flow, after leaving the mixing or collecting container, is conveyed to the secondary side inlet (4.2.1) of the first heat exchanger (4).

## Revendications

1. Dispositif de traitement thermique d'une matière de remplissage fluide ou visqueuse en tant que processus primaire comprenant un premier et un deuxième échangeur de chaleur (3, 4) respectivement avec un côté primaire (4.1, 5.1) et un côté secondaire (4.2, 5.2), dans lequel l'arrivée côté secondaire (4.2.1) du premier échangeur de chaleur (4) est reliée à une arrivée (2) pour la matière de remplissage fluide ou visqueuse, dans lequel l'évacuation côté secondaire (4.2.2) du premier échangeur de chaleur (4) est reliée à l'arrivée côté secondaire (5.2.1) du deuxième échangeur de chaleur (5), dans lequel l'évacuation côté secondaire (5.2.2) du deuxième échangeur de chaleur (5) est reliée à une section de traitement (6) et dans lequel la section de traitement (6) est reliée côté sortie au côté primaire (4.1) du premier échangeur de chaleur (4), **caractérisé en ce qu'**un embranchement (8, 8'), au moyen duquel un flux partiel de la matière de remplissage fluide ou visqueuse est dérivé, est prévu entre l'évacuation côté secondaire (4.2.2) du premier échangeur de chaleur (4) et la section de traitement (6),
que l'embranchement (8, 8') est relié à l'arrivée d'une section d'échange de chaleur (10), au moyen de laquelle de l'énergie thermique contenue dans le flux partiel est amenée au processus secondaire et que l'évacuation de la section d'échange de chaleur (10) est reliée à l'arrivée côté secondaire (4.2.1) du premier échangeur de chaleur (4),
ou que
l'embranchement (8, 8') est relié à l'entrée d'un récipient de mélange ou de collecte, où le flux partiel se mélange avec la matière de remplissage ou avec des composants de la matière de remplissage, ce par quoi de l'énergie thermique contenue dans le flux partiel leur est amenée et qu'une évacuation du récipient de mélange ou de collecte est reliée à l'arrivée côté secondaire (4.2.1) du premier échangeur de chaleur (4).

2. Dispositif selon la revendication 1, **caractérisé en ce que** le débit volumique s'écoulant à travers le côté secondaire (4.2) du premier échangeur de chaleur (4) est supérieur au débit volumique s'écoulant à travers le côté primaire (4.1) du premier échangeur de chaleur (4).

3. Dispositif selon la revendication 1 ou 2, **caractérisé en ce que** l'embranchement (8) est prévu entre le premier et deuxième échangeur de chaleur (4, 5).

4. Dispositif selon la revendication 1 ou 2, **caractérisé en ce que** l'embranchement (8') est prévu entre le deuxième échangeur de chaleur (5) et la section de traitement (6).

5. Dispositif selon l'une quelconque des revendications précédentes, **caractérisé en ce que** le débit volumique du flux partiel évacué au moyen de l'embranchement (8, 8') peut être commandé.

6. Dispositif selon l'une quelconque des revendications précédentes, **caractérisé en ce que** le côté primaire (5.1) du deuxième échangeur de chaleur (5) est traversé par un milieu chauffant chauffé par un dispositif de chauffage.

7. Dispositif selon l'une quelconque des revendications précédentes, **caractérisé en ce que** la section de traitement (6) est une section de pasteurisation.

8. Dispositif selon l'une quelconque des revendications précédentes, **caractérisé par** sa réalisation de telle sorte que le premier et deuxième échangeur de chaleur (4, 5) est réalisé pour l'acheminement de sirop de sucre et que la section d'échange de chaleur (10) est prévue dans un dispositif (11) pour la dissolution de sucre dans un solvant, par exemple de l'eau.

9. Procédé de traitement thermique d'une matière de remplissage fluide ou visqueuse en tant que processus primaire au moyen d'un dispositif (1) comprenant un premier et un deuxième échangeur de chaleur (4, 5) respectivement avec un côté primaire (4.1, 5.1) et un côté secondaire (4.2, 5.2), dans lequel la matière de remplissage fluide ou visqueuse mise à disposition par le biais d'une arrivée (2) est acheminée à travers le côté secondaire (4.2) du premier échangeur de chaleur (4) et ensuite à travers le côté secondaire (5.2) du deuxième échangeur de chaleur (5), dans lequel la matière de remplissage fluide ou visqueuse traverse une section de traitement (6) après le deuxième échangeur de chaleur (5) et ensuite le côté primaire (4.1) du premier échangeur de chaleur (4), **caractérisé en ce qu'**un flux partiel de la matière de remplissage fluide ou visqueuse est dérivé entre le côté secondaire (4.2) du premier échangeur de chaleur (4) et la section de traitement (6),
que le flux partiel dérivé est amené à une section d'échange de chaleur (10) pour amener de l'énergie thermique contenue dans le flux partiel à un processus secondaire et que le flux partiel dérivé est ramené après la traversée de la section d'échange de chaleur (10) à l'arrivée (4.2.1) du côté secondaire (4.2) du premier échangeur de chaleur (4),
ou que
le flux partiel dérivé est amené à l'entrée d'un récipient de mélange ou de collecte, pour amener l'énergie thermique contenue dans le flux partiel à la matière de remplissage contenue dans le récipient de mélange ou de collecte ou à des composants qui y sont contenus et que le volume du flux partiel est amené à l'arrivée côté secondaire (4.2.1) du premier échangeur de chaleur (4) après avoir quitté le récipient de mélange ou de collecte.
